# EUROPÄISCHE PATENTANMELDUNG

(11) **EP 0 878 130 A1**
(43) Veröffentlichungstag der Anmeldung: **18.11.1998**
(21) Anmeldenummer: 98108164.9
(22) Anmeldetag: 05.05.1998
(51) Int. Cl.: A21B 5/02, A47J 37/06

(54) **Backgerät zum Backen von Backwaren**

(30) Priorität: 15.05.1997 DE 29708638 U
(71) Anmelder: Krylov, Gennadi, 34369 Hofgeismar (DE); Krylov, Natalia, 34369 Hofgeismar (DE)
(72) Erfinder: Krylov, Gennadi, 34369 Hofgeismar (DE); Krylov, Natalia, 34369 Hofgeismar (DE)

(57) **Zusammenfassung**

Gemäß der Erfindung zeichnet sich solches Backgerät mit zwei Gehäuseteilen (1,10) dadurch aus, daß jeder Gehäuseteil zum Herstellen von dreidimensionalen Backwaren, also halbschalenförmigen Backwaffeln, einen Backeinsatz (2) mit negativen (3) und einen Backeinsatz (11) mit positiven Ausnehmungen (12) zur Aufnahme von Teig aufweist, wobei die beiden Backeinsätze mit ihren positiven und negativen Ausnehmung ineinandergreifend zusammenführbar sind.

Nach einer besonders vorteilhaften Ausführungsform ist vorgesehen, daß der obere Gehäuseteil (10) eine Messerplatte (50) aufweist, wobei die Messer (40) der Messerplatte (50) im Bereich der Stege (6) zwischen den Ausnehmungen den überstehenden Teil des Teiges abschneiden.

## Beschreibung

Die Erfindung betrifft ein Backgerät zum Backen von Backwaren.

Backgeräte zum Backen von Backwaren sind auch unter dem Begriff "Waffelbackgeräte" bekannt. Ein solches Waffelbackgerät zeigt beispielsweise die DE-A 33 04 170. Allerdings ist mit einem derartigen Waffelbackgerät nur eine im wesentlichen sich in zwei Ebenen erstreckende Waffe herstellbar. Darüber hinaus sind sogenannte Hörnchenwaffeleisen bekannt, bei denen allerdings ebenfalls zunächst eine im wesentlichen ebene Waffel erstellt wird, die allerdings im noch warmen Zustand zu einem Hörnchen gerollt wird.

Das Ziel der Erfindung liegt nun in der Bereitstellung eines Backgerätes, mit dem auch dreidimensionale Backwaren, also beispielsweise halbschalenartige Backwaffeln herstellbar sind.

Gemäß der Erfindung zeichnet sich solches Backgerät mit zwei Gehäuseteilen dadurch aus, daß jeder Gehäuseteil zum Herstellen von dreidimensionalen Backwaren, also halbschalenförmigen Backwaffeln, einen Backeinsatz mit negativen und einen Backeinsatz mit positiven Ausnehmungen zur Aufnahme von Teig aufweist, wobei die beiden Backeinsätze mit ihren positiven und negativen Ausnehmung ineinandergreifend zusammenführbar sind. Die Ausnehmungen können hierbei die verschiedensten Formen aufweisen, so zum Beispiel Sternform, Dreieckform, Konusform, wesentlich ist jedoch immer, daß ein Hohlkörper entsteht, der mit einer beliebigen Füllung ausgefüllt werden kann.

Hierbei ist vorgesehen, daß der obere Backeinsatz die positiven Ausnehmungen und der untere Backeinsatz die negative Ausnehmungen aufweist . Andernfalls würden bei Entfernen des oberen Backeinsatzes die Teiglinge unmittelbar auf den unteren Backeinsatz fallen. Bei jedem Backeinsatz ist es allerdings so, daß die im Backeinsatz angeordneten Ausnehmungen durch Stege voneinander getrennt sind.

Nach einem besonderen Merkmal der Erfindung ist der untere Backeinsatz herausnehmbar. Hierdurch wird erreicht, daß die in dem unteren Backeinsatz lagernden Teiglinge durch Umkippen des Backeinsatzes aus den entsprechenden Ausnehmungen entfernt werden können. Im Zuge der Herausnehmbarkeit des unteren Backeinsatzes ist weiterhin vorgesehen, daß der untere Backeinsatz eine Schale zur Aufnahme durch das untere Gehäuseteil aufweist, wobei die Schale durch eine lösbare elektrische Steckverbindung mit dem unteren Gehäuseteil in Verbindung steht. Hieraus wird deutlich, daß der untere Backeinsatz, ebenso wie der obere Backeinsatz beheizbar ist, obwohl der untere Backeinsatz aus dem Gehäuse entnehmbar ist. Dies wird, wie bereits ausgeführt, dadurch erreicht, daß die elektrische Verbindung, die zur Stromzufuhr für den unteren Backeinsatz erforderlich ist, zwar beim Herausnehmen des unteren Backeinsatzes aus dem Gehäuse unterbrochen ist, aber nach Einsetzen des Backeinsatzes in das untere Gehäuseteil in dem Moment wieder erfolgt, zu dem die Steckverbindung zwischen dem unteren Backeinsatz und dem unteren Gehäuseteil erfolgt ist.

Nach einer besonders vorteilhaften Ausführungsform ist vorgesehen, daß der obere Gehauseteil eine Messerplatte aufweist, wobei die Messer der Messerplatte im Bereich der Stege zwischen den Ausnehmungen den überstehenden Teil des Teiges abschneiden. Hierbei ist die Messerplatte relativ zu dem oberen Gehäuseteil in Richtung auf das untere Gehäuseteil verschiebbar. Hierzu ist zu bemerken, daß beim Einführen des Teiges in die negativen Ausnehmungen des unteren Backeinsatzes und nach entsprechendem Einführen der positiven Ausnehmungen des oberen Backeinsatzes immer eine gewisse Teigmenge aus den Ausnehmungen auf die Stege zu liegen kommt. Dieser Überstehende Rand wird nun mitgebacken und müßte nach Entfernen der Teiglinge aus dem unteren Backeinsatz von Hand entfernt werden. Um eine derartige aufwendige Nacharbeit zu vermeiden, ist vorgesehen, daß durch die an der Messerplatte angeordneten Messer ein derartiger Überstehender Rand im Bereich einer jeden negativen Ausnehmung entfernt wird. Konstruktiv ist hierbei im Einzelnen vorgesehen, daß der obere Backeinsatz zum Durchlaß der Messer im Bereich der Stege Führungsöffnungen zeigt. Jedes Messer besitzt je hierbei einen Messerhals, durch das Messer mit der Messerplatte in Verbindung steht, wobei der Messerhals durch die Führungsöffnungen verschieblich aufnehmbar ist. Die Kontur des Messers entspricht hierbei der Kontur der jeweiligen Ausnehmung im Backeinsatz, um zu gewährleisten, daß der Überstehende Teigrand auch tatsächlich abgeschnitten werden kann. Zur besseren Handhabung weist die Messerplatte ein Kopfteil auf, das aus dem oberen Gehäuseteil herausragt. Vorteilhaft ist hierbei die Messerplatte durch Federkraft aus der Schnittstellung bringbar. Das heißt, daß durch Druck auf das Kopfteil das Messer auf die Stege des unteren Backeinsatzes zugeführt wird, mit der Folge, daß ein Schnitt erfolgt, um dann nach Loslassen aufgrund der Federkraft in die Ausgangsstellung zurückzugelangen, mithin aus dem Schnitt geführten wird. Hierbei ist vorteilhaft vorgesehen, daß die Messerplatte durch mindestens eine, vorzugsweise vier, Zugfedern mit dem oberen Gehäuse in Verbindung steht.

Anhand der Zeichnungen wird die Erfindung nachstehend beispielhaft näher erläutert.
- Figur 1: zeigt in perspektivischer Darstellung das Backgerät mit Gehäuseoberteil und Gehäuseunterteil;
- Figur 2: zeigt einen Schnitt durch das geschlossene Backgerät mit Gehäuseoberteil und Gehäuseunterteil;

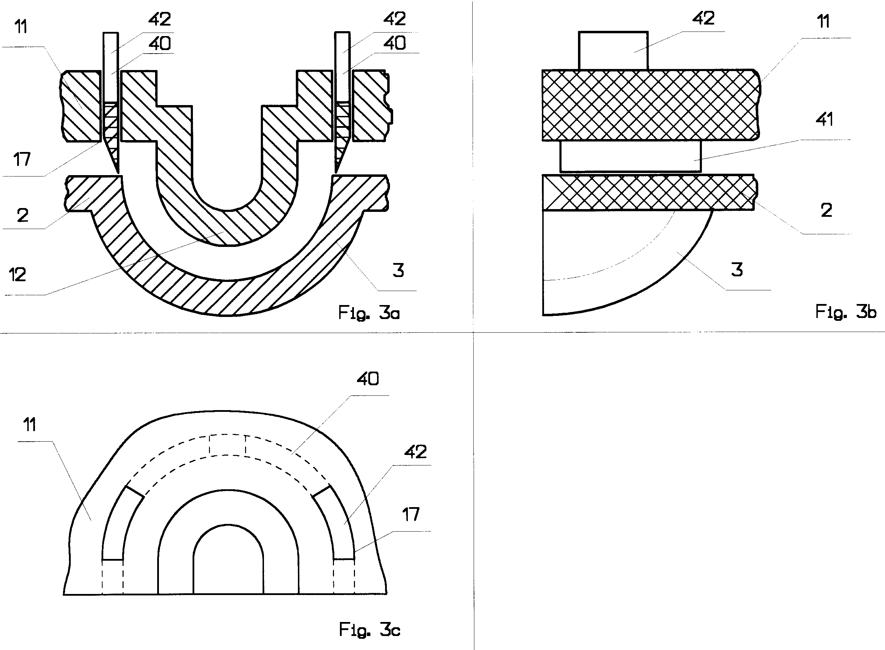

- Figur 3a - 3c: zeigen einen Ausschnitt X gemäß Figur 2, in einer Vorderansicht, einer Seitenansicht und einer Draufsicht;
- Figur 4: zeigt ein Messer der Messerplatte in perspektivischer
Darstellung.

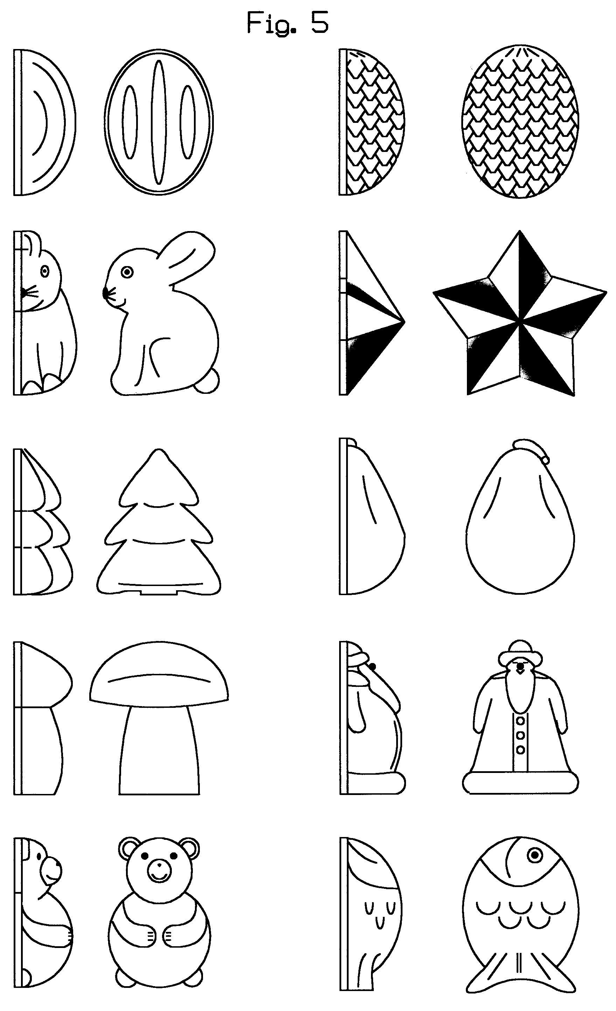

- Figur 5: zeigt verschiedene Backformen.

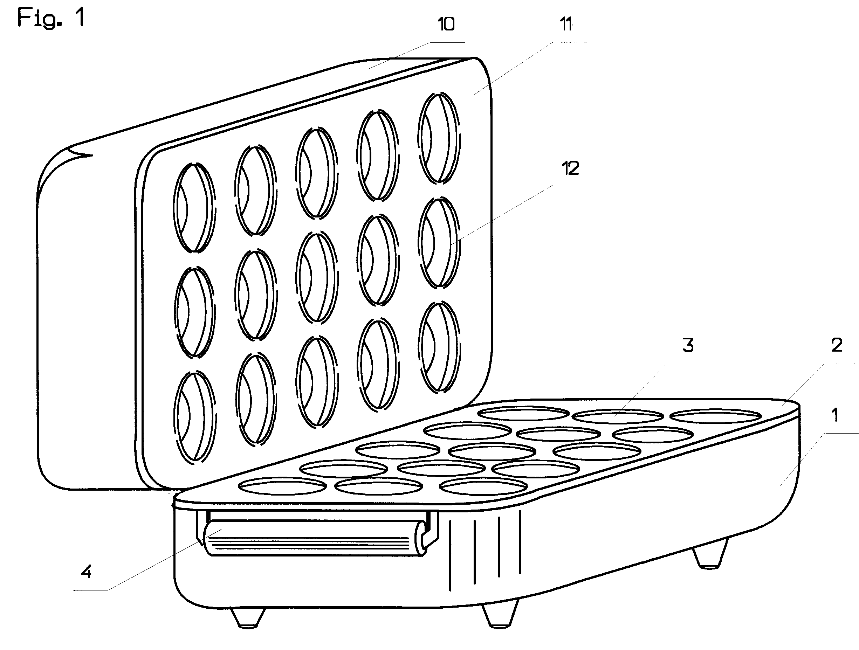

Das Backgerät gemäß Figur 1 zeigt die beiden Gehäuseteile 1 und 10, die durch scharnierartige Gelenke (nicht dargestellt) miteinander verbunden sind. Das Gehäuseteil 1 besitzt hierbei einen Backeinsatz 2 mit negativen Ausnehmungen 3 zur Aufnahme des Teiges für die Backlinge. Korrespondierend hierzu besitzt das obere Gehäuseteil 10 ebenfalls einen Backeinsatz 11 mit positiven Ausnehmungen 12, die auch als Ausbuchtungen bezeichnet werden können, und die in ihrer Größe derart zu den negativen Ausnehmungen 3 korrespondieren, daß beim Zusammenklappen der beiden Gehäusehälften 1 und 10 des Backgerätes die negativen Ausnehmungen 3 die positiven Ausnehmungen 12 derart aufnehmen, daß zwischen der Oberfläche der beiden Ausnehmungen ein Hohlraum gebildet wird, der im wesentlichen der Wandungsstärke der mit dem Backgerät zu backenden Backwaren entspricht. Beide Backeinsätze 2 und 11 sind beheizbar, um ein Backen Überhaupt erst zu ermöglichen. Darüber hinaus ist festzuhalten, daß der Backeinsatz 2 lösbar in dem Gehäuseteil 1 derart angeordnet ist, daß er mittels der Griffe 4, die an den Breitseiten des Backeinsatzes angeordnet sind, aus dem Gehäuseteil 1 herausnehmbar ist. Durch Umdrehen des Backeinsatzes können die in den negativen Ausnehmungen 3 lagernden Backwaren ausgeworfen werden.

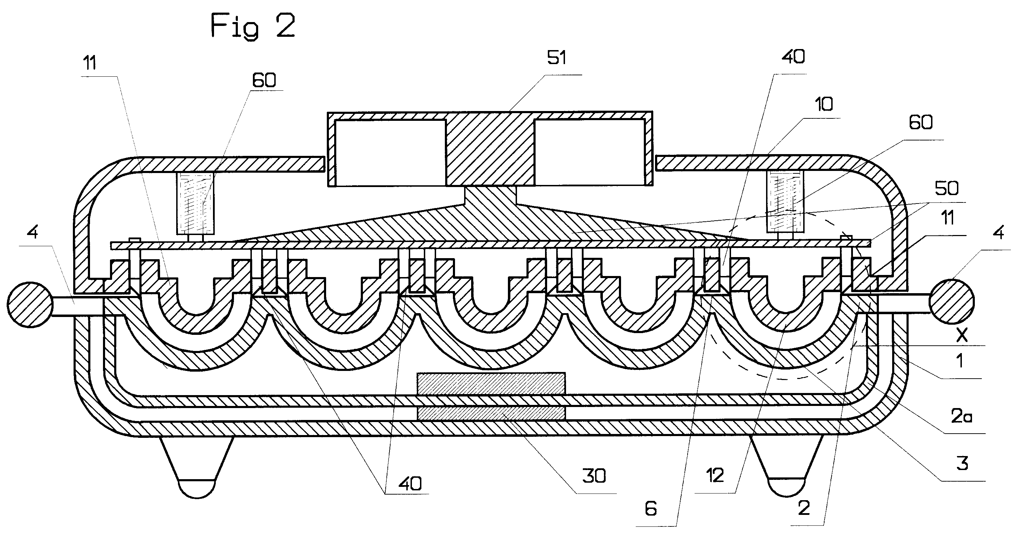

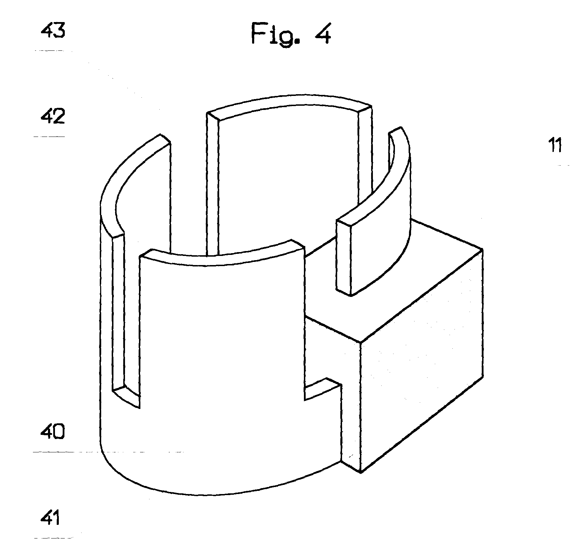

Wie sich aus Figur 2 ergibt, zeigt der untere Backeinsatz 2 eine Schale 2a, die im Bereich des Bodens durch eine lösbare elektrische Steckverbindung mit dem unteren Gehäuseteil 1 in Verbindung steht. Der obere Gehäuseteil 10 zeigt den Backeinsatz 11 mit den positiven Ausnehmungen 12. Zwischen den negativen Ausnehmungen 3 des unteren Backeinsatzes 2 befinden sich Stege 6. In dem Bereich dieser Stege 6 greifen die Messer 40 der Messerplatte 50 an. Die Ausbildung eines Messers 40 ist aus Figur 4 erkennbar. Hierbei zeigt das Messer 40 endseitig Schneiden 41, wobei zwischen den einzelnen Schneiden 41 unter Bildung von Messerhälsen 42 Aussparungen 43 vorgesehen sind, wobei die Aussparungen 43 der Führung der Messerhälse 42 durch Führungsöffnungen 17 in dem oberen Backeinsatz 11 dienen. Am entgegengesetzten Ende der Schneide 41 ist das Messer, wie aus Figur 2 erkennbar, mit der Messerplatte 50 verbunden. Die Messerplatte 50 erstreckt sich im wesentlichen Über die gesamte Fläche des Backeinsatzes 11 und ist durch vier Zugfederanordnungen 60 im Gehäuse 10 gehalten, wobei jeweils zwei davon hintereinander angeordnet sind. Die Messerplatte besitzt darüber hinaus das Kopfteil 51, wobei durch entsprechendes Aufdrücken auf den Kopfteil 51 die Messer 40 auf die Stege 6 zubewegt werden; hierbei wird die Zugfeder der Federanordnung 60 gespannt, so daß nach Loslassen des Kopfes 51 die Messerplatte samt den Messern in ihre Ausgangsstellung zurückgeht.

## Patentansprüche

1. Backgerät zum Backen von Backwaren mit zwei Gehäuseteilen,
**dadurch gekennzeichnet**,
daß zur Herstellung von dreidimensionalen Backwaren der Gehäuseteil (1) einen Backeinsatz (2) mit negativen und der Gehäuseteil (10) einen Backeinsatz (11) mit positiven Ausnehmungen zur Aufnahme von Teig aufweist, wobei die beiden Backeinsätze (2, 11) mit ihren positiven und negativen Ausnehmungen (3, 12) ineinandergreifend zusammenführbar sind.

2. Backgerät nach Anspruch 1 ,
**dadurch gekennzeichnet**,
daß der untere Gehäuseteil (1) den Backeinsatz (2) mit den negativen Ausnehmungen (3) aufweist.

3. Backgerät nach Anspruch 1,
**dadurch gekennzeichnet**,
daß der untere Backeinsatz (2) herausnehmbar ist.

4. Backgerät nach einem der voranstehenden Ansprüche,
**dadurch gekennzeichnet**,
daß die Backeinsätze (2, 11) beheizbar sind.

5. Backgerät nach einem der voranstehenden Ansprüche,
**dadurch gekennzeichnet**,
daß der untere Backeinsatz (2) eine Schale (2a) aufweist, wobei die Schale (2a) durch eine lösbare elektrische Steckverbindung (30) mit dem unteren Gehäuseteil (1) in Verbindung steht.

6. Backgerät nach einem der voranstehenden Ansprüche,
**dadurch gekennzeichnet**,
daß der obere Gehäuseteil (10) den Backeinsatz (11) (obere Backeinsatz) mit den positiven Ausnehmungen (12) aufweist.

7. Backgerät nach einem der voranstehenden Ansprüche,
**dadurch gekennzeichnet**,
daß die im Backeinsatz (2) angeordneten Ausnehmungen (3) durch Stege (6) voneinander getrennt sind.

8. Backgerät nach einem der voranstehenden Ansprüche,
**dadurch gekennzeichnet**,
daß der obere Gehäuseteil (10) eine Messerplatte (50) aufweist, wobei die Messer (40) der Messerplatte (50) den im Bereich der Stege (6) Überstehenden Teig abschneiden.

9. Backgerät nach einem der voranstehenden Ansprüche,
**dadurch gekennzeichnet**,
daß die Messerplatte (50) relativ zu dem oberen Gehäuseteil (10) in Richtung auf das untere Gehäuseteil (1 ) verschiebbar ist.

10. Backgerät nach einem der voranstehenden Ansprüche,
**dadurch gekennzeichnet**,
daß der obere Backeinsatz (11) zum Durchlaß der Messer (40) im Bereich der Stege (6) Führungsöffnungen (17) zeigt.

11. Backgerät nach einem der voranstehenden Ansprüche,
**dadurch gekennzeichnet**,
daß das Messer (40) einen Messerhals (42) aufweist, durch den das Messer (40) mit der Messerplatte (50) in Verbindung steht, wobei der Messerhals (42) durch die Führungsöffnung (17) im Backeinsatz (11) verschieblich aufnehmbar ist.

12. Backgerät nach einem der voranstehenden Ansprüche,
**dadurch gekennzeichnet**,
daß die Kontur des Messers (40) der Kontur der Ausnehmung (3) im Backeinsatz (2) nachgebildet ist.

13. Backgerät nach einem der voranstehenden Ansprüche,
**dadurch gekennzeichnet**,
daß die Messerplatte (50) ein Kopfteil (51) aufweist, daß aus dem oberen Gehäuseteil (10) ragt.

14. Backgerät nach einem der voranstehenden Ansprüche,
**dadurch gekennzeichnet**,
daß die Messerplatte (50) durch Federkraft (60) aus der Schnittstellung bringbar ist.

15. Backgerät nach einem der voranstehenden Ansprüche,
**dadurch gekennzeichnet**,
daß die Messerplatte (50) durch mindestens eine, vorzugsweise vier, Zugfedern (60) mit dem oberen Gehäuse (10) in Verbindung steht.
